(19) Europäisches Patentamt
European Patent Office
Office européen des brevets

(11) EP 3 156 518 A1

(12) EUROPEAN PATENT APPLICATION

(43) Date of publication:
**19.04.2017 Bulletin 2017/16**

(21) Application number: **15189674.3**

(22) Date of filing: **14.10.2015**

(51) Int Cl.:
***C23F 11/12*** (2006.01)
***C25D 11/24*** (2006.01)
***C23C 22/57*** (2006.01)
***C23C 22/83*** (2006.01)
***C09D 5/08*** (2006.01)
***C23C 22/46*** (2006.01)
***C23C 22/68*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Helmholtz-Zentrum Geesthacht Zentrum für Material- und Küstenforschung GmbH**
**21502 Geesthacht (DE)**

(72) Inventors:
- **Lamaka, Sviatlana**
  **21502 Geesthacht (DE)**
- **Höche, Daniel**
  **21035 Hamburg (DE)**
- **Blawert, Carsten**
  **21481 Lauenburg (DE)**
- **Zheludkevich, Mikhail L.**
  **21502 Geesthacht (DE)**

(74) Representative: **Uexküll & Stolberg**
**Partnerschaft von**
**Patent- und Rechtsanwälten mbB**
**Beselerstraße 4**
**22607 Hamburg (DE)**

# (54) CORROSION INHIBITOR COMPOSITION FOR MAGNESIUM OR MAGNESIUM ALLOYS

(57) The present invention relates to novel corrosion inhibitor compositions for magnesium or magnesium alloys and to a process for inhibiting the corrosion of such metals using such compositions. The corrosion inhibitor composition comprises a compound comprising a carboxyl group preventing the redeposition of noble impurities which significantly decreases the corrosion rate by complexing said noble impurities, e.g. iron, nickel and copper.

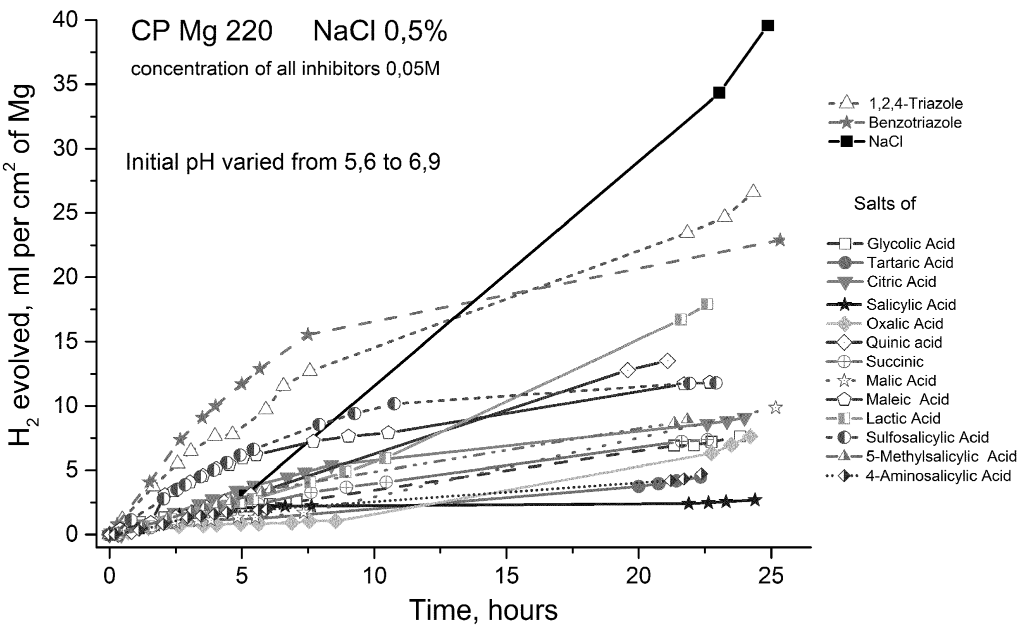


Fig. 1

EP 3 156 518 A1

## Description

FIELD OF THE INVENTION

The present invention relates to novel corrosion inhibitor compositions for magnesium or magnesium alloys and to a process for inhibiting the corrosion of such metals using such compositions.

BACKGROUND OF THE INVENTION

Magnesium is most lightweight of all structural metals, weighing 35 percent less than aluminum and 78 percent less than steel. Lightweight characteristics, wide availability and processability make magnesium alloys suitable for production of motor vehicle components, electric products, aircraft components, etc. Generally, magnesium and magnesium alloys are made into shaped articles mainly by die casting, extrusion or rolling. However, the percentage of magnesium alloys used in automobiles, electric products, aircraft components, etc. has been traditionally low. The reasons for the limited use of magnesium alloys are associated with the intrinsic properties of this family of alloys: low creep and corrosion resistance.

The corrosion resistance of magnesium or magnesium alloys depends on similar factors that are critical to other metals. However, because of the electrochemical activity of magnesium, the relative importance of some factors is greatly amplified. When unalloyed magnesium is exposed to air at room temperature, a gray oxide forms on its surface. Moisture converts this oxide to magnesium hydroxide, which is stable in the basic range of pH values, but not in the neutral or acid ranges.

For providing anti-corrosion properties, magnesium or magnesium alloys are generally treated with chromates. The chromate treatment nevertheless involves the difficulty in setting the conditions for the treatment, so that it has been desired to provide more convenient corrosion inhibiting processes. Furthermore, the chromate treatment has the drawback that when conducted, the treatment discolors the surface of the metal, depriving the metal of its luster. Furthermore, chromium compounds are rather toxic and harmful to the environment. Thus, processes are highly desirable which are less likely to burden the environment.

For achieving corrosion protection, magnesium can also be coated in an assortment of ways depending on the type of alloy used, the desired qualities of the finished material and the application in which it will be used. For example, magnesium can be coated with organic layers. These layers prevent against corrosion of the magnesium by insulating it from the outside environment.

Advanced coating systems also possess active corrosion protection that implies continuous corrosion protection, even in the event of local damage to the coating. This is achieved by incorporating corrosion inhibitors in the coating systems.

U.S. Patent 6,569,264 B1 discloses a corrosion inhibitor composition for magnesium or magnesium alloys for use in protective coatings, which contains as an effective component, a phosphate, at least one compound selected from among aromatic carboxylic acids or salts thereof and a pyrazole or triazole. Published European patent application 1 683 894 A1 discloses the use of 1,2,3-triazoles, 1,2,4-triazoles or pyrazole as useful corrosion inhibitors for magnesium and magnesium alloys, which could be incorporated in protective coatings.

However, there is still the need to provide corrosion inhibitors for use in coatings for magnesium or magnesium alloys which have an improved effectiveness.

SUMMARY OF THE INVENTION

It is therefore an object of the present invention to provide novel corrosion inhibitor compositions for magnesium or magnesium alloys useful in coatings which are more effective and of lesser environmental concern than known corrosion inhibitor compositions and to a process for inhibiting the corrosion of such metals using such compositions.

This object is achieved by a corrosion inhibitor composition for magnesium or magnesium alloys which comprises at least one corrosion inhibiting compound of Formula (1), or a salt of the compound of Formula (1):

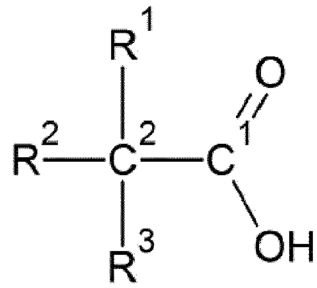

(1),

wherein $R^1$, $R^2$ and $R^3$ are independently selected from hydrogen; hydroxy; a $C_1$-$C_8$ alkyl; a $C_1$-$C_8$ carboxyalkyl, wherein the alkyl group is optionally substituted with one or more substituents selected from hydroxy and carboxy; a $C_1$-$C_8$ carboxyalkenyl, wherein the alkenyl group is optionally substituted with one or more substituents selected from hydroxy and carboxy; or $R^1$ and $R^2$ together with $C^2$ form a $C_6$-$C_{12}$ aliphatic or aromatic ring, which is optionally substituted with at least one hydroxy substituent, provided that when $R^1$ and $R^2$ together with $C^2$ form an aromatic $C_6$-$C_{12}$ ring, $R^3$ is absent; or $R^1$ and $R^2$ together with $C^2$ form a carbonyl group to form a compound of Formula (2), or a salt of a compound of Formula (2)

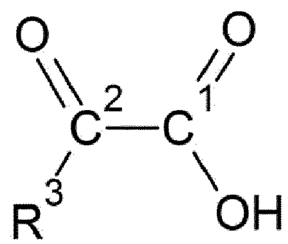

(2),

wherein $R^3$ is defined as above.

Preferably, at least one of $R^1$, $R^2$ and $R^3$ is selected from the group consisting of hydroxy; a $C_1$-$C_8$ carboxyalkyl, wherein the alkyl group is optionally substituted with one or more substituents selected from hydroxy and carboxy; a $C_1$-$C_8$ carboxyalkenyl, wherein the alkenyl group is optionally substituted with one or more substituents selected from hydroxy and carboxy. More preferably at least one of $R^1$, $R^2$ and $R^3$ is selected from the group consisting of hydroxy; a $C_1$-$C_4$ carboxyalkyl, wherein the alkyl group is optionally substituted with one or more substituents selected from hydroxy and carboxy; or a $C_1$-$C_2$ carboxyalkenyl, wherein the alkenyl group is optionally substituted with one or more substituents selected from hydroxy and carboxy. Preferred compounds of this kind include glycolic acid, lactic acid, tartaric acid, quinic acid, succinic acid, malic acid, citric acid, and maleic acid.

According to a further preferred embodiment, $R^1$ and $R^2$ together with $C^2$ form a $C_6$-$C_{12}$ aromatic ring, which is substituted with at least one hydroxy substituent, and $R^3$ is absent. Preferably, the $C_6$-$C_{12}$ aromatic ring, is substituted with a hydroxy substituent in ortho-position to the carboxy group. More preferably, $R^1$ and $R^2$ together with $C^2$ form a $C_6$ aromatic ring, which is substituted with at least one hydroxy substituent in ortho-position to the carboxy group to form a compound of Formula (3), or a salt of a compound of Formula (3):

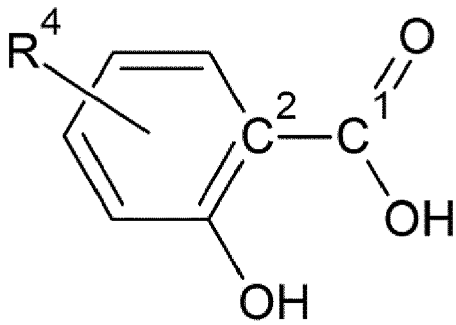

(3),

wherein $R^4$ is selected from the group consisting of hydrogen; hydroxy; alkyl, wherein the alkyl group is optionally substituted with one or more substituents selected from hydroxy and carboxy; carboxy; $-SO_3H$ and $-NH_2$. Preferred

compounds of this kind include salicylic acid, sulfosalicylic acid, methyl salicylic acid, aminosalicylic acid and salts thereof. The $R^4$ group may be located in ortho-, meta- or para-position relative to the carboxy group. Exemplary compounds include 3-methylsalicylic acid, 4-methylsalicylic acid, 5-methylsalicylic acid, 6-methylsalicylic acid, 3-sulfosalicylic acid, 4-sulfosalicylic acid, 5-sulfosalicylic acid, 6-sulfosalicylic acid, 3-aminosalicylic acid, 4-aminosalicylic acid, 5-aminosalicylic acid, 6-aminosalicylic acid and salts thereof. Especially preferred are salicylic acid, 4-aminosalicylic acid and 5-methylsalicylic acid and salts thereof.

According to a further preferred embodiment, the compound of Formula (2) is oxalic acid.

Preferably the salts of compounds of Formula (1), (2) or (3) are selected from their alkali metal or earth alkaline metal salts, more preferably the salts of compounds of Formula (1), (2) or (3) are selected from their lithium, sodium or potassium salts, most preferably sodium salts are used.

Without wishing to be bound to any theory for patenting purposes, the inventors attribute the excellent corrosion inhibiting effect of compounds of Formulae (1), (2) or (3) to their capability of reducing the re-deposition of noble impurities. The present inventors found that noble impurities like, iron, copper and nickel, although being the sites of cathodic reaction, get detached from the corroding magnesium by undermining mechanisms and dissolve by forming Fe(II), Fe(III), Cu(I), Cu(II) and Ni(II) ions. Subsequently, these ions are being reduced and re-deposit on the surface of the magnesium or magnesium alloy. This enlarges the area of cathodic activity and accelerates corrosion. Thus, based on this finding, it has been found that prevention of re-deposition of noble impurities significantly decreases the corrosion rate. Re-deposition of dissolved iron, nickel and copper is effectively avoided by chemically binding said ions by means of complexing agents among which carboxylic acids and hydroxy carboxylic acids are excellent ligands for metal ions including iron, copper and nickel.

It will be appreciated that according to a preferred embodiment of the compounds of Formula (1) at least one of $R^1$, $R^2$ and $R^3$ is hydrogen and at least one of $R^1$, $R^2$ and $R^3$ is hydroxyl, and that according to another preferred embodiment of the compounds of Formula (1), at least one of $R^1$, $R^2$ and $R^3$ is $C_1$-$C_8$ carboxyalkyl, preferably a $C_1$-$C_6$ carboxyalkyl, more preferably a $C_1$-$C_4$ carboxyalkyl, even more preferably carboxymethyl or carboxyethyl, wherein the alkyl chain is optionally functionalized with one or more groups selected from hydroxyl and carboxyl. It has been found that compounds comprising $\alpha$- and $\beta$-hydroxycarboxylic acid groups are particularly good corrosion inhibitors, which is most likely due to the formation of stable chelate complexes.

According to a further preferred embodiment of Formula (1), $R^1$ and $R^2$ together with $C^2$ form an aliphatic $C_6$ ring (cyclohexane), which is preferably substituted with one or more, preferably two or more, more preferably three or more, most preferably four hydroxyl groups.

It is further preferred that the corrosion inhibiting compounds of Formulae (1), (2) and/or (3) form stable complexes with Fe(II) or Fe(III) or Cu(I) or Cu(II) or Ni(II) thereby preventing re-deposition of said metals onto the magnesium or magnesium alloy thereby significantly decreasing the corrosion rate. It is preferred that the corrosion inhibiting compounds form complexes with at least one of Fe(II), Fe(III), Cu(I), Cu(II) and Ni(II) ions with a stability constant of $\log K \geq 3.5$, wherein K is the stability constant of the formed complexes.

According to a preferred embodiment, the corrosion inhibiting compounds of Formula (1), (2) and/or (3) are incorporated in a coating deposited on magnesium or a magnesium alloy. It is further preferred that the corrosion inhibiting compounds of Formula (1), (2) and/or (3) are present in cavities of porous nano- or micro-particles distributed within the coating. Preferably, the porous nano- or microparticles are selected from the group consisting of zeolites, layered double hydroxides and silicas.

According to a preferred embodiment, the corrosion inhibiting compounds of Formula (1), (2) and/or (3) are incorporated in micro- and nano-pores produced on the surface of magnesium or magnesium alloys. According to a further preferred embodiment, the corrosion inhibiting compounds of Formula (1), (2) and/or (3) are incorporated in nano- and micro-particles distributed in micro- and nano-pores produced on the surface of magnesium or magnesium alloys. Preferably, the micro- and nano-pores are produced by an anodizing process, such as, for example, PEO (plasma electrolytic oxidation), MAO (microarc oxidation), anodization or spark anodization. Preferably, the PEO, MAO or anodic layer has a thickness of 2 to 50 $\mu$m.

The object of the present invention is further achieved by a process for inhibiting the corrosion of magnesium or magnesium alloys comprising the steps of a) providing magnesium or a magnesium alloy and b) coating the magnesium or magnesium alloy with a corrosion inhibiting coating comprising a corrosion inhibitor of Formula (1), (2) and/or (3) or a salt thereof.

It is preferred that the process for inhibiting the corrosion of magnesium or magnesium alloys further comprises a step a1) between step a) and b), wherein in step a1) the magnesium or magnesium alloy is pre-treated with the novel corrosion inhibitor composition. In this way, metal impurities are dissolved from the surface of the magnesium or magnesium alloy before coating thereby further increasing the corrosion resistance.

The corrosion inhibitor composition is preferably used as a coating for magnesium or a magnesium alloy.

EXAMPLES

Preferred embodiments of the present invention are further illustrated by the following, non-limiting examples by referring to the figures below. Magnesium materials used for hydrogen evolution measurements presented in Figures 1 to 9 were as specified in Table 1. The ingots of HP Mg 51, WE43, ZE41, E21, AZ31, AZ91 and AM50 were shaved to receive the stripes with the surface area of 240 to 480 $cm^2/g$. This was done to ensure the identical chemical composition of each portion of the alloy used for testing solutions of different inhibitors. The plates (5.0 $cm^2/g$) of commercial purity magnesium (CP Mg 220) were tested.

Table 1. Noble impurities found* in the materials used for hydrogen evolution tests.

| | **Impurity, ppm** | | |
|---|---|---|---|
| **Material** | Fe | Cu | Ni |
| High Purity Mg (HP Mg 51) | **51** | **< 1** | **< 2** |
| Commercial Purity Mg (CP Mg 220) | **220** | **5** | **< 2** |
| WE43 | **38** | **47** | **46** |
| ZE41 | **15** | **19** | **8** |
| Elektron 21 (E21) | **12** | **20** | **52** |
| AZ31 | **15** | **14** | **3** |
| AZ91 | **22** | **48** | **< 2** |
| AM50 | **8** | **13** | **3** |
| * Analysed by spark emission spectroscopy | | | |

**Table 1:** Noble impurities found* in the materials used for hydrogen evolution tests.

**Fig. 1** shows the results (normalized values) of hydrogen evolution measurements during immersion of CP Mg(commercial purity Mg containing Fe - 220 ppm) in 0.5% NaCl containing 0.05 M of salicylic acid (sodium salt), 5-sulfosalicylic acid (sodium salt), 4-aminosalicylic acid (sodium salt), 5-methylsalicylic acid (sodium salt), tartaric acid (sodium salt), oxalic acid (sodium salt), glycolic acid (sodium salt), succinic acid (sodium salt), malic acid (sodium salt), citric acid (sodium salt), maleic acid (sodium salt), quinic acid (sodium salt), lactic acid (sodium salt), 1,2,4-triazole (comparative), benzotriazole (comparative) and NaCl (comparative); pH of resulting solutions of sodium salts (adjusted by NaOH) was 5.6 to 6.9).

**Fig. 2** shows the inhibiting efficiency (%) calculated from the data of Fig. 1 at 20 hours of immersion.

**Fig. 3** shows the results (normalized values) of hydrogen evolution measurements during immersion of seven Mg based materials in 0.5 % NaCl; pH = 5.7

**Fig. 4** shows the results (normalized values) of hydrogen evolution measurements during immersion of seven Mg based materials in 0.5 % NaCl containing 0.05 M of glycolic acid (sodium salt); pH = 7.2 (adjusted by NaOH).

**Fig. 5** shows the results (normalized values) of hydrogen evolution measurements during immersion of seven Mg based materials in 0.5 % NaCl containing 0.05 M of 4-aminosalicylic acid (sodium salt); pH = 6.9 (adjusted by NaOH).

**Fig. 6** shows the results (normalized values) of hydrogen evolution measurements during immersion of magnesium alloy WE43 (Fe - 38 ppm) in 0.5 % NaCl containing 0.05 M of glycolic acid (sodium salt), oxalic acid (sodium salt), quinic acid (sodium salt), tartaric acid (sodium salt), 4-aminosalicylic acid (sodium salt), 1,2,4-triazole (comparative) and NaCl (comparative); (pH = 5.6 to 7.2 (adjusted by NaOH)).

**Fig. 7** shows the results (normalized values) of hydrogen evolution measurements during immersion of magnesium alloy ZE41 (Fe - 15 ppm) in 0.5 % NaCl containing 0.05 M of glycolic acid (sodium salt), oxalic acid (sodium salt), quinic acid (sodium salt), tartaric acid (sodium salt), 4-aminosalicylic acid (sodium salt), 1,2,4-triazole (comparative) and NaCl (comparative); (pH = 5.6 to 7.2 (adjusted by NaOH)).

**Fig. 8** shows the results (normalized values) of hydrogen evolution measurements during immersion of magnesium alloy AM50 (Fe - 8 ppm) in 0.5 % NaCl containing 0.05 M of glycolic acid (sodium salt), oxalic acid (sodium salt), quinic acid (sodium salt), tartaric acid (sodium salt), 4-aminosalicylic acid (sodium salt), 1,2,4-triazole (comparative) and NaCl (comparative); (pH = 5.6 to 7.2 (adjusted by NaOH)).

**Fig. 9** shows the results (normalized values) of hydrogen evolution measurements during immersion of magnesium alloy AZ31 (Fe - 15 ppm) in 0.5 % NaCl containing 0.05 M of glycolic acid (sodium salt), oxalic acid (sodium salt), quinic acid (sodium salt), tartaric acid (sodium salt), 4-aminosalicylic acid (sodium salt), 1,2,4-triazole (comparative) and NaCl (comparative); (pH = 5.6 to 7.2 (adjusted by NaOH)).

In the examples shown in Figs. 1 to 9, the corrosion of the magnesium or magnesium alloy in solution was determined by measuring the amount of evolving hydrogen because hydrogen is formed upon oxidation (corrosion) of Mg to $Mg^{2+}$ at the surface of the magnesium or magnesium alloy. The more magnesium is oxidized to $Mg^{2+}$ during corrosion, the more hydrogen is formed. As can be seen in Figs. 1 to 9, the novel corrosion inhibiting compounds efficiently protect the magnesium and magnesium alloys from corrosion and show significantly improved corrosion inhibiting efficiencies compared to 1,2,4-triazole and benzotriazole as known from US 6,569,264 B1.

As it is shown in Fig. 2, salicylic acid shows a corrosion inhibiting efficiency of more than 60% better than benzotriazole and about 55% better than 1,2,4-triazole known from the prior art. Even lactic acid, i.e. the novel corrosion inhibiting compound with the lowest inhibiting efficiency, still has a corrosion inhibiting efficiency of about 20% better than benzotriazole and about 15% better than 1,2,4-triazole. The values of the inhibiting efficiency (IE) were calculated using the following equation:

$$IE = \frac{CR_0 - CR_{inh}}{CR_0}$$

were $CR_0$ is the corrosion rate in pure 0.5% NaCl and $CR_{inh}$ is the corrosion rate in the presence of NaCl and inhibitor. The corrosion rate was determined as amount of $H_2$ (ml) evolved at 20 hours of immersion (one mole of evolved hydrogen is equal to one mole of dissolved magnesium).

As it is evident from Figs. 4 to 9, the corrosion inhibiting effect of the novel corrosion inhibiting compounds is not restricted to a specific magnesium alloy, but present for a large variety of different magnesium alloys, e.g. HP Mg 51, CP Mg 220, WE43, ZE41, E21, AZ31, AZ91 or AM50. Independently of the magnesium alloy, the novel corrosion inhibiting compounds show a significantly improved corrosion inhibiting effect compared to 1,2,4-triazole.

## Claims

1. Corrosion inhibitor composition for magnesium or magnesium alloys comprising at least one corrosion inhibiting compound of Formula 1, or a salt of the compound of Formula (1) :

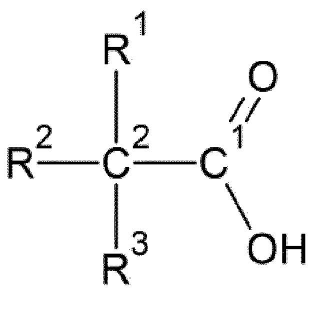
(1),

wherein $R^1$, $R^2$ and $R^3$ are independently selected from hydrogen; hydroxy; a $C_1$-$C_8$ alkyl; a $C_1$-$C_8$ carboxyalkyl, wherein the alkyl group is optionally substituted with one or more substituents selected from hydroxy and carboxy; a $C_1$-$C_8$ carboxyalkenyl, wherein the alkenyl group is optionally substituted with one or more substituents selected from hydroxy and carboxy; or $R^1$ and $R^2$ together with $C^2$ form a $C_6$-$C_{12}$ aliphatic or aromatic ring, which is optionally substituted with at least one hydroxy substituent, provided that when $R^1$ and $R^2$ together with $C^2$ form an aromatic $C_6$-$C_{12}$ ring, $R^3$ is absent; or $R^1$ and $R^2$ together with $C^2$ form a carbonyl group to form a compound of Formula (2),

or a salt of a compound of Formula (2)

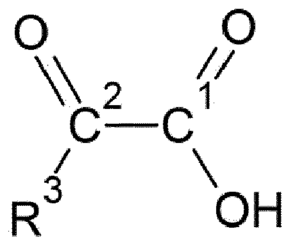

(2),

wherein $R^3$ is defined as above.

2. Corrosion inhibitor composition according to claim 1, wherein at least one of $R^1$, $R^2$ and $R^3$ is selected from the group consisting of hydroxy; a $C_1$-$C_8$ carboxyalkyl, wherein the alkyl group is optionally substituted with one or more substituents selected from hydroxy and carboxy; a $C_1$-$C_8$ carboxyalkenyl, wherein the alkenyl group is optionally substituted with one or more substituents selected from hydroxy and carboxy.

3. Corrosion inhibitor composition according to claim 2, wherein at least one of $R^1$, $R^2$ and $R^3$ is selected from the group consisting of hydroxy; a $C_1$-$C_4$ carboxyalkyl, wherein the alkyl group is optionally substituted with one or more substituents selected from hydroxy and carboxy; or a $C_1$-$C_2$ carboxyalkenyl, wherein the alkenyl group is optionally substituted with one or more substituents selected from hydroxy and carboxy.

4. Corrosion inhibitor composition according to claim 1, wherein $R^1$ and $R^2$ together with $C^2$ form a $C_6$-$C_{12}$ aromatic ring, which is substituted with at least one hydroxy substituent, and $R^3$ is absent.

5. Corrosion inhibitor composition according to claim 4, wherein the $C_6$-$C_{12}$ aromatic ring, is substituted with a hydroxy substituent in ortho-position to the carboxy group.

6. Corrosion inhibitor composition according to claim 5, wherein the at least one corrosion inhibiting compound is a compound of Formula (3):

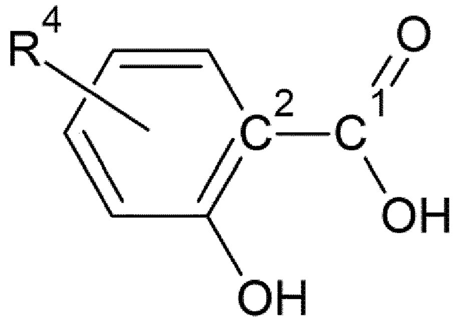

(3),

wherein $R^4$ is selected from the group consisting of hydrogen; hydroxy; alkyl, wherein the alkyl group is optionally substituted with one or more substituents selected from hydroxy and carboxy; carboxy; $-SO_3H$ and $-NH_2$, and salts thereof.

7. Corrosion inhibitor composition according to one of the previous claims, wherein the salts of compounds of Formula (1), (2) or (3) are selected from their alkali metal or earth alkaline metal salts.

8. Corrosion inhibitor composition according to claim 1, wherein at least one of $R^1$, $R^2$ and $R^3$ is hydrogen and at least one of $R^1$, $R^2$ and $R^3$ is hydroxyl.

9. Corrosion inhibitor composition according to claim 1, wherein at least one of $R^1$, $R^2$ and $R^3$ is $C_1$-$C_8$ carboxyalkyl, preferably a $C_1$-$C_6$ carboxyalkyl, more preferably a $C_1$-$C_4$ carboxyalkyl, even more preferably carboxymethyl or

carboxyethyl, wherein the alkyl chain is optionally functionalized with one or more groups selected from hydroxyl and carboxyl.

**10.** Corrosion inhibitor composition according to claim 1, wherein $R^1$ and $R^2$ together with $C^2$ form an aliphatic $C_6$ ring, which is preferably substituted with one or more, preferably two or more, more preferably three or more, most preferably four hydroxyl groups.

**11.** Corrosion inhibitor composition according to one of the previous claims, wherein the corrosion inhibiting compounds are incorporated in a coating.

**12.** Corrosion inhibitor composition according to claim 11, wherein the corrosion inhibiting compounds are present in cavities of porous nano- or microparticles distributed within the coating.

**13.** Corrosion inhibitor composition according to one of the previous claims, wherein the corrosion inhibiting compounds are present in micro- and nano-pores produced on the surface of magnesium or magnesium alloys.

**14.** Corrosion inhibitor composition according to claim 13, wherein the corrosion inhibiting compounds are incorporated in nano- and microparticles distributed in micro- and nano-pores produced on the surface of magnesium or magnesium alloys.

**15.** Process for inhibiting the corrosion of magnesium or magnesium alloys comprising the steps of a) providing magnesium or a magnesium alloy and b) coating the magnesium or magnesium alloy with a corrosion inhibiting coating comprising a corrosion inhibitor according to one of claims 1 to 10 or a salt thereof.

**16.** Process for inhibiting the corrosion of magnesium or magnesium alloys according to claim 15, further comprising a step a1) between step a) and b), wherein in step a1) the magnesium or magnesium alloy is pre-treated with a corrosion inhibitor composition according to one of claims 1 to 10.

**17.** Use of the corrosion inhibitor composition according to one of claims 1 to 10 as a coating for magnesium or a magnesium alloy.

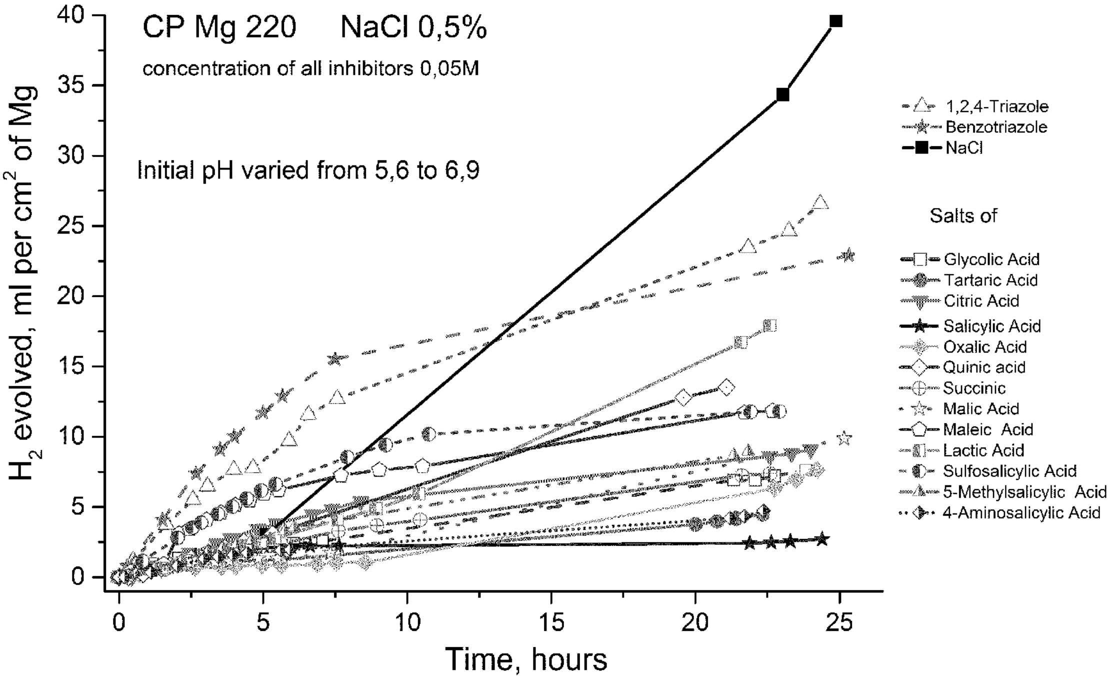
CP Mg 220 NaCl 0,5%
concentration of all inhibitors 0,05M
Initial pH varied from 5,6 to 6,9
$H_2$ evolved, ml per $cm^2$ of Mg
Time, hours
1,2,4-Triazole
Benzotriazole
NaCl
Salts of
Glycolic Acid
Tartaric Acid
Citric Acid
Salicylic Acid
Oxalic Acid
Quinic acid
Succinic
Malic Acid
Maleic Acid
Lactic Acid
Sulfosalicylic Acid
5-Methylsalicylic Acid
4-Aminosalicylic Acid

Fig. 1

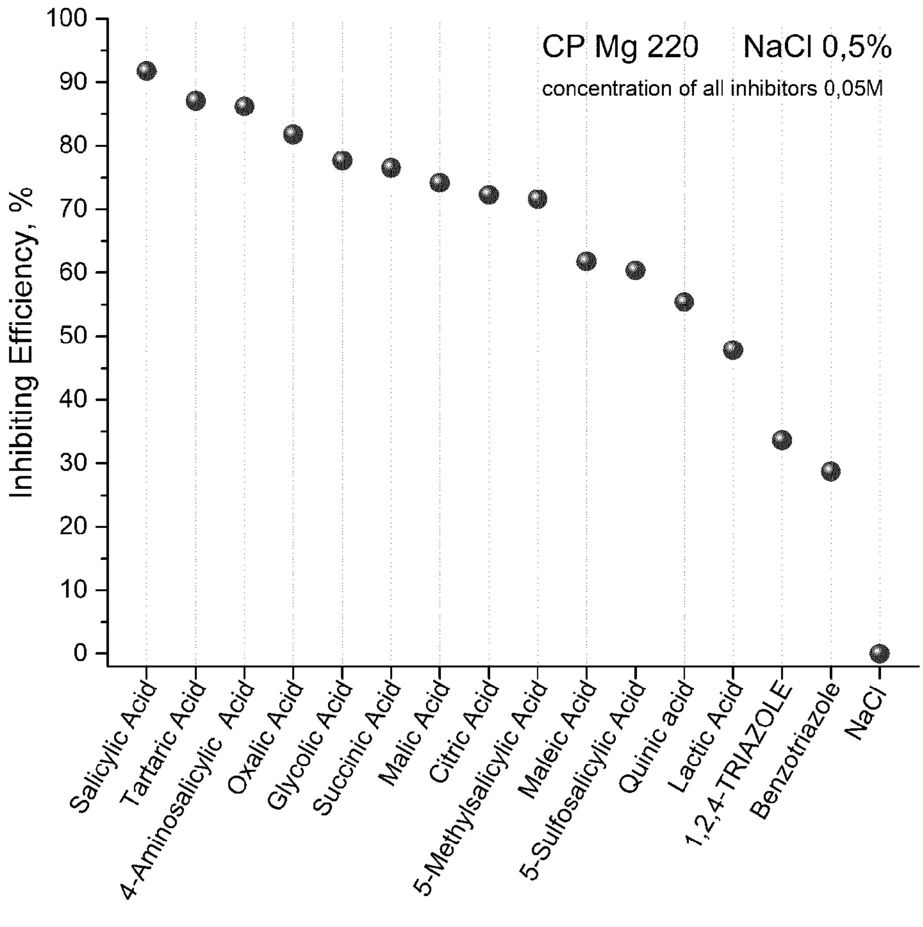
CP Mg 220 NaCl 0,5%
concentration of all inhibitors 0,05M
Inhibiting Efficiency, %
100
90
80
70
60
50
40
30
20
10
0
Salicylic Acid
Tartaric Acid
4-Aminosalicylic Acid
Oxalic Acid
Glycolic Acid
Succinic Acid
Malic Acid
Citric Acid
5-Methylsalicylic Acid
Maleic Acid
5-Sulfosalicylic Acid
Quinic acid
Lactic Acid
1,2,4-TRIAZOLE
Benzotriazole
NaCl

Fig. 2

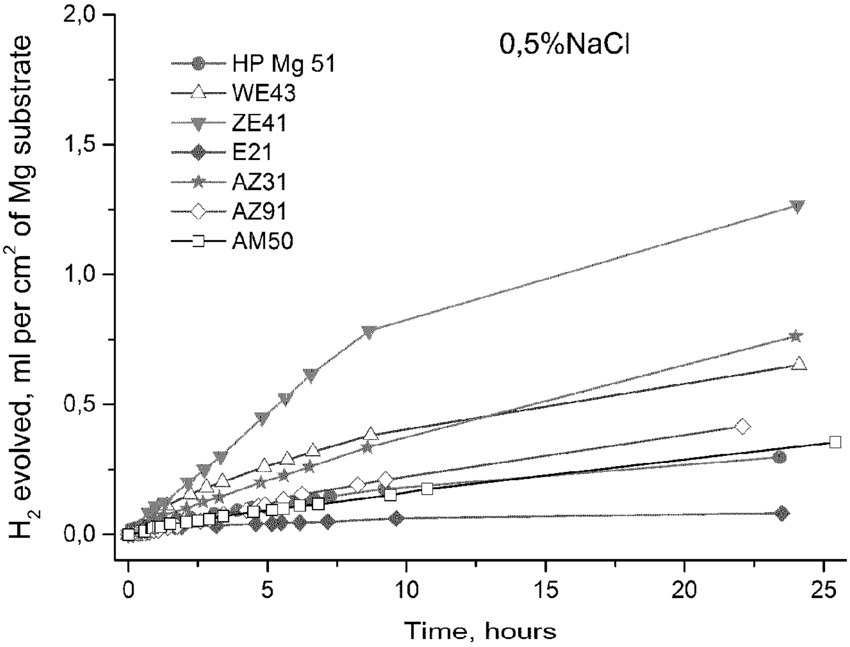
0,5%NaCl
HP Mg 51
WE43
ZE41
E21
AZ31
AZ91
AM50
$H_2$ evolved, ml per $cm^2$ of Mg substrate
Time, hours
2,0
1,5
1,0
0,5
0,0
0
5
10
15
20
25

Fig. 3

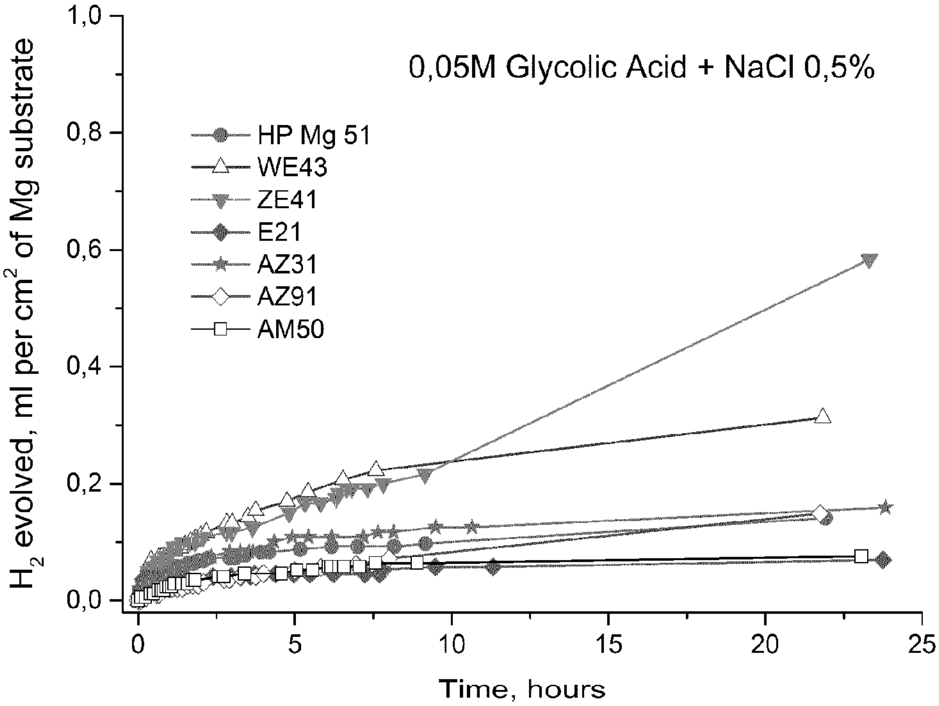
0,05M Glycolic Acid + NaCl 0,5%
HP Mg 51
WE43
ZE41
E21
AZ31
AZ91
AM50
$H_2$ evolved, ml per $cm^2$ of Mg substrate
Time, hours
1,0
0,8
0,6
0,4
0,2
0,0
0
5
10
15
20
25

Fig. 4

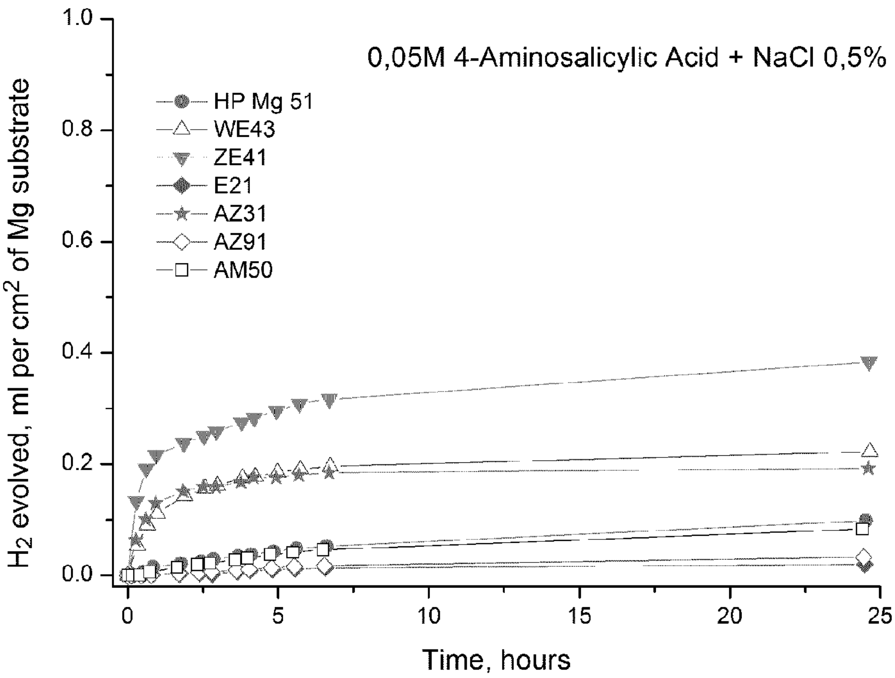
0,05M 4-Aminosalicylic Acid + NaCl 0,5%
HP Mg 51
WE43
ZE41
E21
AZ31
AZ91
AM50
H2 evolved, ml per cm2 of Mg substrate
1.0
0.8
0.6
0.4
0.2
0.0
0
5
10
15
20
25
Time, hours

Fig.5

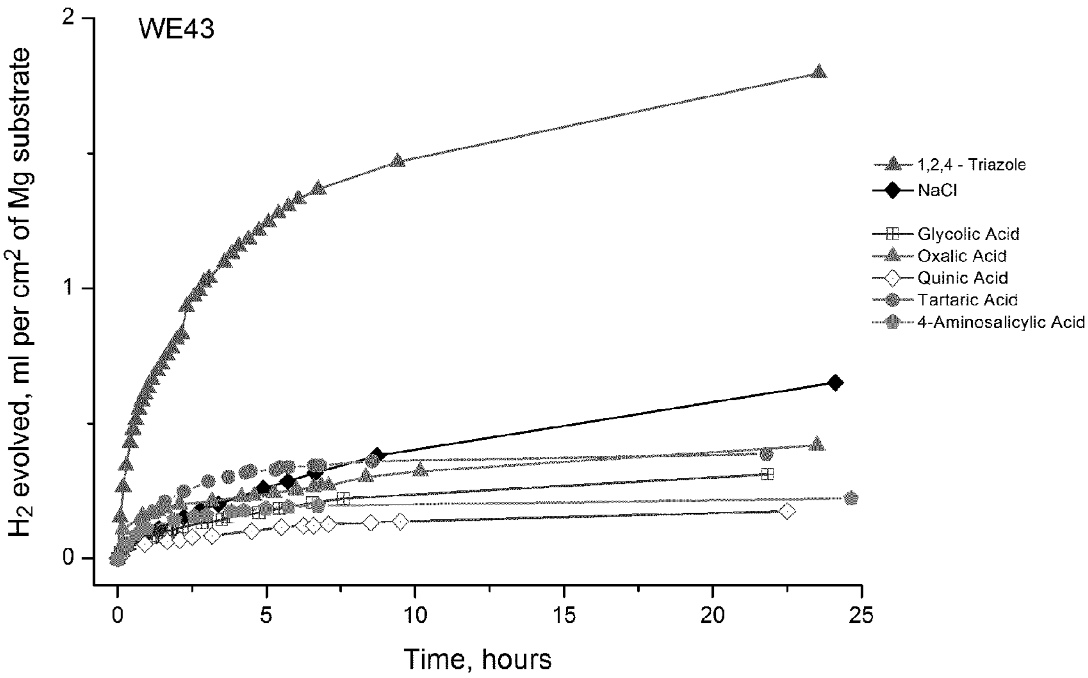
WE43
H2 evolved, ml per cm2 of Mg substrate
Time, hours
0
1
2
0
5
10
15
20
25
1,2,4 - Triazole
NaCl
Glycolic Acid
Oxalic Acid
Quinic Acid
Tartaric Acid
4-Aminosalicylic Acid

Fig. 6

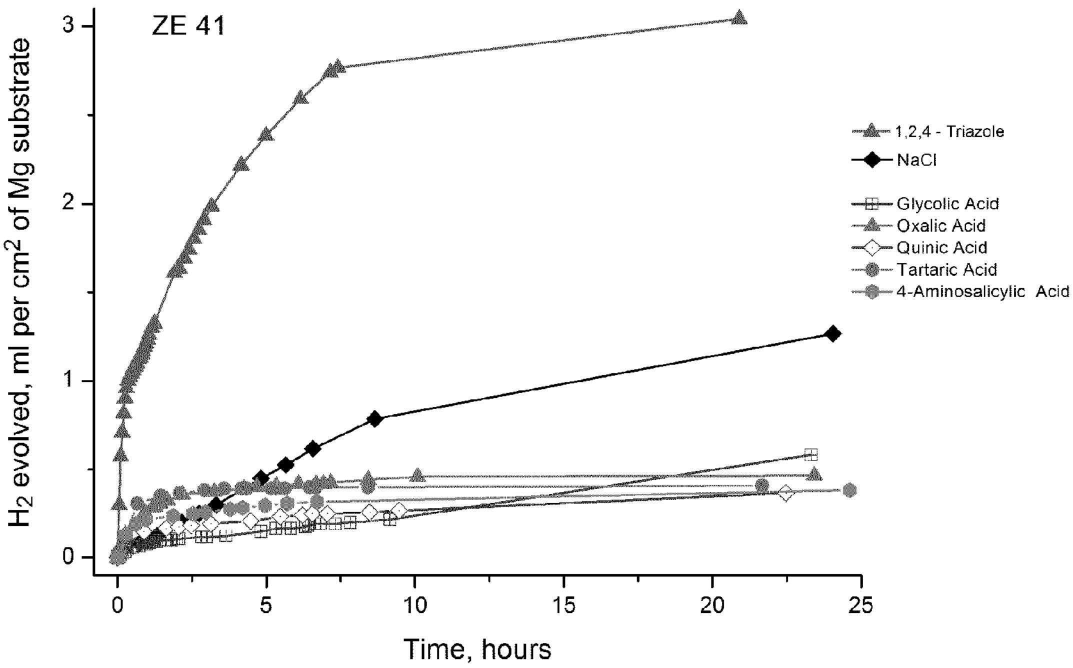
ZE 41
H2 evolved, ml per cm2 of Mg substrate
Time, hours
0
1
2
3
0
5
10
15
20
25
1,2,4 - Triazole
NaCl
Glycolic Acid
Oxalic Acid
Quinic Acid
Tartaric Acid
4-Aminosalicylic Acid

Fig. 7

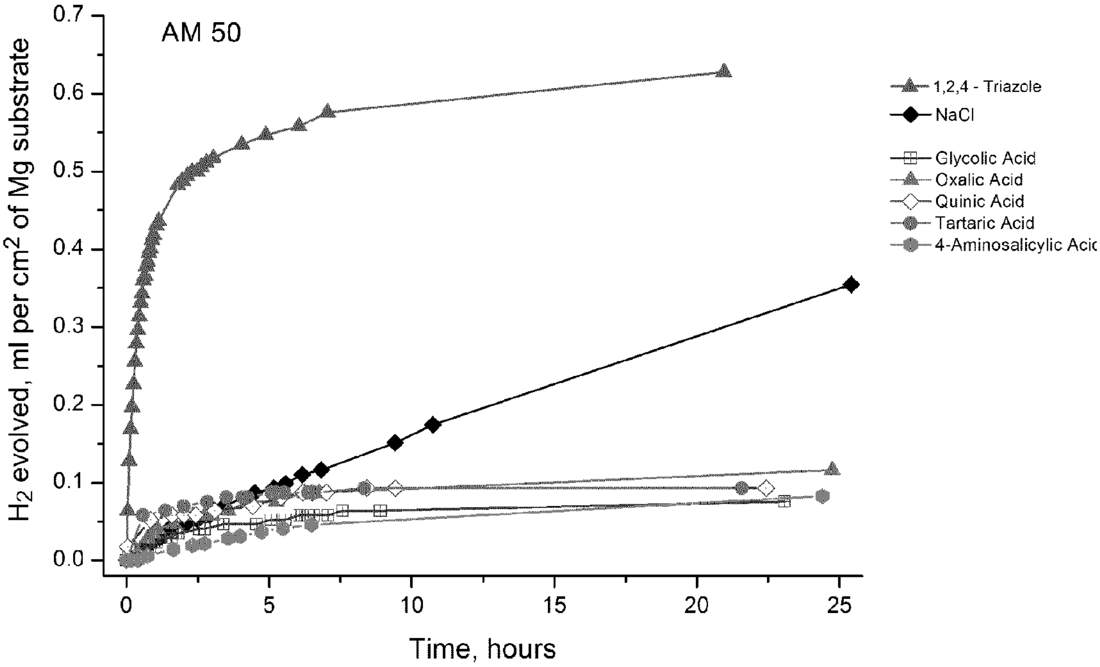
AM 50
$H_2$ evolved, ml per $cm^2$ of Mg substrate
Time, hours
1,2,4 - Triazole
NaCl
Glycolic Acid
Oxalic Acid
Quinic Acid
Tartaric Acid
4-Aminosalicylic Acic
0.0
0.1
0.2
0.3
0.4
0.5
0.6
0.7
0
5
10
15
20
25

Fig. 8

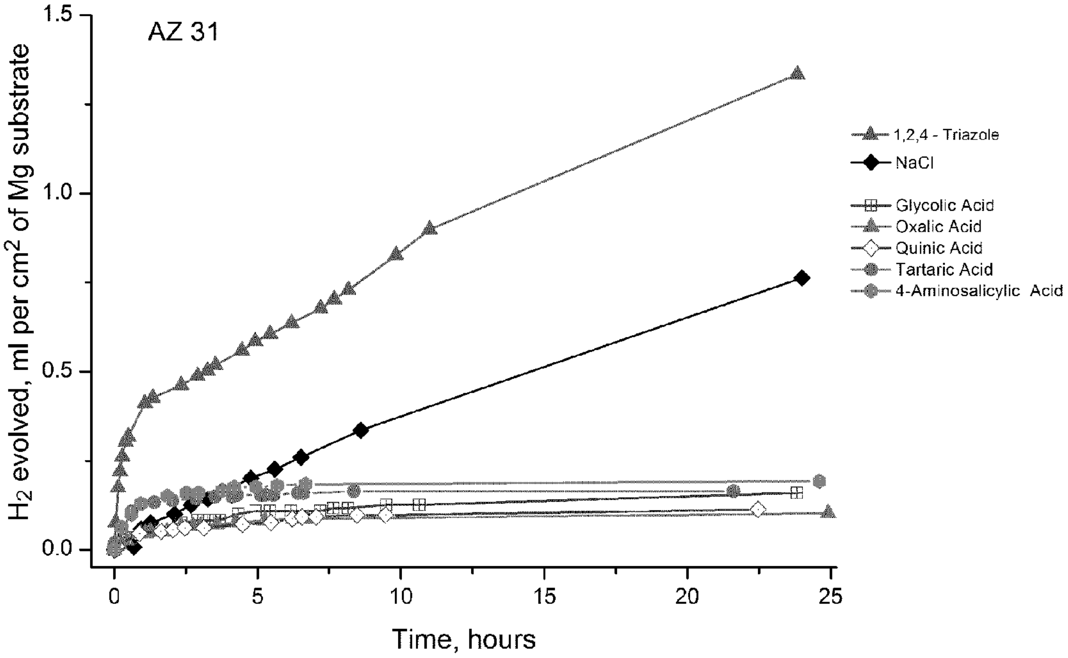
AZ 31
1.5
1.0
0.5
0.0
H2 evolved, ml per cm2 of Mg substrate
0
5
10
15
20
25
Time, hours
1,2,4 - Triazole
NaCl
Glycolic Acid
Oxalic Acid
Quinic Acid
Tartaric Acid
4-Aminosalicylic Acid

Fig. 9

Europäisches Patentamt
European Patent Office
Office européen des brevets

# EUROPEAN SEARCH REPORT

Application Number
EP 15 18 9674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/064941 A1 (SACHDEV ANIL K [US] ET AL) 17 March 2011 (2011-03-17)<br>* page 1, paragraph 1-9 *<br>* page 1, paragraph 11 - page 2, paragraph 15 *<br>* page 2, paragraph 16 - page 4, paragraph 39; figures 1-3 *<br>* claims 1-15 *<br>----- | 1,7,11, 12,14, 15,17 | INV.<br>C23F11/12<br>C09D5/08<br>C25D11/24<br>C23C22/46<br>C23C22/57<br>C23C22/68<br>C23C22/83 |
| X | US 2015/079298 A1 (FERREIRA MARIO [PT] ET AL) 19 March 2015 (2015-03-19)<br>* page 1, paragraph 1-4 *<br>* page 1, paragraph 11 - page 3, paragraph 28 *<br>* page 5, paragraphs 45, 50 *<br>* page 9, paragraph 87-94 *<br>* page 11, paragraph 111 - page 12, paragraph 111 *<br>* page 12, paragraph 116-117 *<br>* page 16; examples sample A13, A42, A43; table 2 *<br>* page 21; example E25; table 6 *<br>* page 21; example E34; table 7 *<br>* claims 1-25 *<br>* page 13, paragraph 120 *<br>-----<br>-/-- | 1-9,11, 12,14, 15,17 | TECHNICAL FIELDS SEARCHED (IPC)<br>C23F<br>C09D<br>C25D<br>C23C |

The present search report has been drawn up for all claims

1

| Place of search | Date of completion of the search | Examiner |
|---|---|---|
| Munich | 6 April 2016 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 18 9674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/115492 A1 (TDA RES [US]; COOK RONALD L [US]) 2 November 2006 (2006-11-02)<br>* page 1, lines 5-11 *<br>* page 1, line 25 - page 2, line 32 *<br>* page 3, line 31 - page 4, line 17 *<br>* page 5, lines 15-22 *<br>* page 6, lines 20-25 *<br>* page 7, line 14 - page 8, line 33 *<br>* page 9, line 20 - page 11, line 33 *<br>* page 12; figures 1-6 *<br>* page 18, line 9 - page 19, line 11 *<br>* page 19, line 30 - page 21, line 27 *<br>* page 21, line 30 - page 23, line 29; examples 1, 2 *<br>* page 24, line 31 - page 25, line 29; example 5 *<br>* page 26, lines 4-18; examples 7, 8 *<br>* claims 1-25 *<br>----- | 1,4,8, 11,12, 14,15,17 | |
| X | US 2004/054044 A1 (BITTNER KLAUS [DE] ET AL) 18 March 2004 (2004-03-18)<br>* page 1, paragraph 1 *<br>* page 1, paragraph 9 - page 2, paragraph 16 *<br>* page 3, paragraph 33 *<br>* page 5, paragraph 54-57 *<br>* page 7, paragraph 79-85 *<br>* page 7, paragraph 89-101; examples 1, 2 *<br>* examples 1,2; tables 1,2 *<br>* claims 1-40 *<br>-----<br>-/-- | 1-3,8,9, 11,12, 15,17 | TECHNICAL FIELDS SEARCHED (IPC) |

The present search report has been drawn up for all claims

1

| Place of search | Date of completion of the search | Examiner |
|---|---|---|
| Munich | 6 April 2016 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 18 9674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 6 569 264 B1 (FUKUMURA KAZUNORI [JP] ET AL) 27 May 2003 (2003-05-27)<br>* column 1, lines 9-18 *<br>* column 3, lines 4-67 *<br>* column 4, line 14 - column 5, line 7 *<br>* column 5, line 45 - column 6, line 7 *<br>* column 6, lines 24-44 *<br>* column 8, line 43 - column 9, line 25 *<br>* example 11; tables 4, 5 *<br>* example 22; tables 12, 14, 15 *<br>* claims 1-16 *<br>----- | 1,7,11, 13,15-17 | |
| X | DE 10 2007 004292 A1 (HENKEL AG & CO KGAA [DE]) 24 July 2008 (2008-07-24)<br>* page 2, paragraph 1-3 *<br>* page 2, paragraph 7 - page 3, paragraph 13 *<br>* page 4, paragraph 17 *<br>* page 5, paragraph 25-26 *<br>* page 6, paragraph 32 - page 7, paragraph 42 *<br>* page 8, paragraph 45-47; table 1 *<br>* claims 1, 13-21 *<br>----- | 1,11,15, 17 | TECHNICAL FIELDS SEARCHED (IPC) |
| X | EP 0 995 785 A1 (TEXACO DEVELOPMENT CORP [US]) 26 April 2000 (2000-04-26)<br>* page 3, paragraph 9 - page 4, paragraph 23 *<br>* examples 5, 8-12, 14-15 *<br>* page 6, paragraph 40-45 *<br>* page 7; table 1 *<br>* claims 1-16 *<br>* page 1, paragraph 1-4 *<br>-----<br>-/-- | 1,7,11, 15,17 | |

The present search report has been drawn up for all claims

1

| Place of search | Date of completion of the search | Examiner |
|---|---|---|
| Munich | 6 April 2016 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 18 9674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/006796 A1 (YANG BO [US] ET AL) 14 January 2010 (2010-01-14)<br>* page 2, paragraph 17 - page 3, paragraph 33 *<br>* page 8, paragraph 85-87 *<br>* page 8, paragraph 90 - page 9, paragraph 91 *<br>* page 9, paragraph 95 - page 10, paragraph 107 *<br>* page 10, paragraph 110-114 *<br>----- | 1-4,7-10 | |
| X | US 2004/029754 A1 (WENDEROTH BERND [FR] ET AL) 12 February 2004 (2004-02-12)<br>* page 1, paragraph 1-4 *<br>* page 2, paragraph 21-36 *<br>* examples A1-A8; tables 1, 2 *<br>* examples 1-10 *<br>----- | 1-4,8,9 | |
| X | EP 1 111 092 A1 (BASF AG [DE]) 27 June 2001 (2001-06-27)<br>* page 2, paragraphs 1, 4, 5 *<br>* page 3, paragraph 20-28 *<br>* page 4, paragraph 32-35 *<br>* page 5; examples 1-9; table 1 *<br>* page 6; examples 1-9; table 2 *<br>* claims 1-10 *<br>----- | 1,4,7,8 | TECHNICAL FIELDS SEARCHED (IPC) |

The present search report has been drawn up for all claims

1

| Place of search | Date of completion of the search | Examiner |
|---|---|---|
| Munich | 6 April 2016 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 18 9674

This annex lists the patent family members relating to the patent documents cited in the above-mentioned European search report. The members are as contained in the European Patent Office EDP file on
The European Patent Office is in no way liable for these particulars which are merely given for the purpose of information.

06-04-2016

| Patent document cited in search report | Publication date | Patent family member(s) | Publication date |
|---|---|---|---|
| US 2011064941 A1 | 17-03-2011 | CN 102021555 A | 20-04-2011 |
| | | DE 102010036054 A1 | 21-04-2011 |
| | | US 2011064941 A1 | 17-03-2011 |
| US 2015079298 A1 | 19-03-2015 | AU 2013251173 A1 | 23-10-2014 |
| | | CA 2869697 A1 | 24-10-2013 |
| | | CN 104619431 A | 13-05-2015 |
| | | EP 2838672 A1 | 25-02-2015 |
| | | JP 2015520018 A | 16-07-2015 |
| | | KR 20150024809 A | 09-03-2015 |
| | | PT 106256 A | 17-10-2013 |
| | | US 2015079298 A1 | 19-03-2015 |
| | | WO 2013156541 A1 | 24-10-2013 |
| WO 2006115492 A1 | 02-11-2006 | CA 2606407 A1 | 02-11-2006 |
| | | EP 1880041 A1 | 23-01-2008 |
| | | WO 2006115492 A1 | 02-11-2006 |
| US 2004054044 A1 | 18-03-2004 | AT 327291 T | 15-06-2006 |
| | | AU 1500902 A | 22-04-2002 |
| | | AU 2002215009 B2 | 25-05-2006 |
| | | CA 2426442 A1 | 08-04-2003 |
| | | DE 10161383 A1 | 22-08-2002 |
| | | EP 1330498 A2 | 30-07-2003 |
| | | ES 2265445 T3 | 16-02-2007 |
| | | US 2004054044 A1 | 18-03-2004 |
| | | US 2007190259 A1 | 16-08-2007 |
| | | WO 0231222 A2 | 18-04-2002 |
| | | ZA 200302863 A | 13-04-2004 |
| | | ZA 200302865 A | 13-04-2004 |
| US 6569264 B1 | 27-05-2003 | CN 1335896 A | 13-02-2002 |
| | | EP 1148154 A1 | 24-10-2001 |
| | | KR 100427114 B1 | 17-04-2004 |
| | | TW 541354 B | 11-07-2003 |
| | | US 6569264 B1 | 27-05-2003 |
| | | WO 0040777 A1 | 13-07-2000 |
| DE 102007004292 A1 | 24-07-2008 | DE 102007004292 A1 | 24-07-2008 |
| | | EP 2111440 A1 | 28-10-2009 |
| | | WO 2008089858 A1 | 31-07-2008 |
| EP 0995785 A1 | 26-04-2000 | AT 231566 T | 15-02-2003 |
| | | AU 754798 B2 | 28-11-2002 |
| | | AU 5880699 A | 01-05-2000 |
| | | BG 65318 B1 | 31-01-2008 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 15 18 9674

This annex lists the patent family members relating to the patent documents cited in the above-mentioned European search report. The members are as contained in the European Patent Office EDP file on
The European Patent Office is in no way liable for these particulars which are merely given for the purpose of information.

06-04-2016

| Patent document cited in search report | Publication date | Patent family member(s) | Publication date |
|---|---|---|---|
| | | BG 105466 A | 30-11-2001 |
| | | BR 9914413 A | 26-06-2001 |
| | | CA 2347431 A1 | 20-04-2000 |
| | | CN 1323361 A | 21-11-2001 |
| | | CZ 20011220 A3 | 12-12-2001 |
| | | DE 69905072 D1 | 27-02-2003 |
| | | DE 69905072 T2 | 06-11-2003 |
| | | EP 0995785 A1 | 26-04-2000 |
| | | EP 1133585 A1 | 19-09-2001 |
| | | ES 2191459 T3 | 01-09-2003 |
| | | JP 4386586 B2 | 16-12-2009 |
| | | JP 2002527619 A | 27-08-2002 |
| | | PL 347173 A1 | 25-03-2002 |
| | | PT 1133585 E | 30-06-2003 |
| | | RU 2227175 C2 | 20-04-2004 |
| | | SI 1133585 T1 | 30-06-2003 |
| | | TR 200101075 T2 | 21-09-2001 |
| | | US 6398984 B1 | 04-06-2002 |
| | | US 2002053655 A1 | 09-05-2002 |
| | | WO 0022189 A1 | 20-04-2000 |
| US 2010006796 A1 | 14-01-2010 | CN 102149786 A | 10-08-2011 |
| | | EP 2300554 A2 | 30-03-2011 |
| | | JP 2011527726 A | 04-11-2011 |
| | | KR 20110040873 A | 20-04-2011 |
| | | US 2010006796 A1 | 14-01-2010 |
| | | US 2014319409 A1 | 30-10-2014 |
| | | WO 2010006256 A2 | 14-01-2010 |
| US 2004029754 A1 | 12-02-2004 | AT 286953 T | 15-01-2005 |
| | | CA 2431695 A1 | 04-07-2002 |
| | | DE 10064737 A1 | 04-07-2002 |
| | | EP 1346005 A1 | 24-09-2003 |
| | | ES 2236347 T3 | 16-07-2005 |
| | | JP 2004517209 A | 10-06-2004 |
| | | KR 20030066754 A | 09-08-2003 |
| | | MX PA03005419 A | 10-09-2003 |
| | | NO 20032837 A | 20-06-2003 |
| | | PT 1346005 E | 31-05-2005 |
| | | US 2004029754 A1 | 12-02-2004 |
| | | WO 02051957 A1 | 04-07-2002 |
| EP 1111092 A1 | 27-06-2001 | DE 19962757 A1 | 28-06-2001 |
| | | DE 50009637 D1 | 07-04-2005 |
| | | EP 1111092 A1 | 27-06-2001 |
| | | ES 2238231 T3 | 01-09-2005 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 15 18 9674

This annex lists the patent family members relating to the patent documents cited in the above-mentioned European search report. The members are as contained in the European Patent Office EDP file on The European Patent Office is in no way liable for these particulars which are merely given for the purpose of information.

06-04-2016

| Patent document cited in search report | Publication date | Patent family member(s) | Publication date |
| --- | --- | --- | --- |
| ------------------------------------------------------------------------ | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6569264 B1
- EP 1683894 A1